# EUROPÄISCHE PATENTSCHRIFT

(11) **EP 1 559 155 B1**
(45) Veröffentlichungstag und Bekanntmachung des Hinweises auf die Patenterteilung: **20.06.2012**
(21) Anmeldenummer: 03763813.7
(22) Anmeldetag: 10.07.2003
(51) Int. Cl.: H01M 10/04, H01M 4/04, H01M 10/052, H01M 4/13, H01M 10/056

(54) **VERFAHREN ZUR HERSTELLUNG VON SPEICHERN FÜR ELEKTRONISCHE ENERGIE AUF BASIS VON WIEDERAUFLADBAREN LITHIUM-POLYMER-ZELLEN**
METHOD FOR THE PRODUCTION OF DEVICES FOR STORING ELECTRIC POWER BASED ON RECHARGEABLE LITHIUM POLYMER CELLS
PROCEDE DE FABRICATION D'ACCUMULATEURS POUR DE L'ENERGIE ELECTRIQUE A BASE DE CELLULES LITHIUM-POLYMERE RECHARGEABLES

(30) Priorität: 11.07.2002 DE 10231319
(43) Veröffentlichungstag der Anmeldung: 03.08.2005
(73) Patentinhaber: Dilo Trading AG, 6300 Zug (CH); NAARMANN, Herbert, 67227 Frankenthal (DE)
(72) Erfinder: NAARMANN, Herbert, 67227 Frankenthal (DE); KRUGER, Franz, Josef, 65817 Eppstein (DE)
(74) Vertreter: TBK
(86) Internationale Anmeldenummer: PCT/EP2003/007517
(87) Internationale Veröffentlichungsnummer: WO 2004/008559

(56) Entgegenhaltungen:
- EP-A- 0 145 498
- WO-A-00/13249
- WO-A-97/44847
- DE-A- 10 020 031
- US-A- 5 316 875
- US-A- 5 437 692
- US-A- 5 743 921
- US-B1- 6 280 879

## Beschreibung

Speicher für elektrische Energie bestehen aus einem Verbundsystem aus Anode, Kathode und Separator.

Bei Lithium Polymer Zellen besteht das Speichersystem aus Li-interkalierbarem Kohlenstoff als Anode, einem Li-interkalierbarem Schwermetalloxid als Kathode und einem Separator als trennende Zwischenschicht.

Der erhaltene Verbund wird dann zu Mehrfachlagen verarbeitet und zu prismatischen bzw. Wickelzellen verarbeitet. Nach dem Einhausen und Polen liegt eine Lithium-Polymer Batterie vor, die nach dem Formieren betriebsbereit ist; mit Spannung von ca. 4 Volt und Zyklenzeiten > 300.

Einzelheiten zur Herstellung und zum System sind literaturbekannt und dem "Handbook of Battery Materials" edit. I.O. Besenhard, Verlag VCH, Weinheim, 1999, zu entnehmen (1). Spezielle Herstellungsverfahren, wie z. B. den sog. Bellcore-Prozeß sind beschrieben in "Lithium Ion Batteries" edit M. Wakihara et O. Yamamoto, Verlag VCH, Weinheim 1998 S. 235 u. Fig. 10.9 (2).

Zur Herstellung der Lithium-Polymer Batterie werden grundsätzlich verschiedene Prozesse verwendet. 1. der Beschichtungsprozeß, bei dem (die) der für die Kathoden- bzw. Anodenmasse erforderliche Polymerbinder gelöst wird (z. B. ca. 5 - 10%ig Fluorelastomere Homo oder Copolymere in z. B. N-Methyl-Pyrrolidon (NMP) und diese Polymerlösung mit den kathoden- bzw. anodenspezifischen Zusätzen wie Li-interkalierbare Metalloxide bzw. Li-interkalierbare Kohlenstoffe (Ruß, Graphit o.ä.) versetzt und dispergiert wird und dann diese Dispersion entsprechend der Filmbeschichtungstechnik auf Stromkollektoren (Folien, Bändern, Netzen o.ä. - Cu vorzugsweise für die Anode, Al vorzugsweise für die Kathode) aufgetragen wird.

Eine Variante (1a) der oben beschriebenen Beschichtungstechnik besteht in der Verwendung von wässrigen Polymerdispersionen anstelle der Polymerlösungen mit organischen Lösungsmitteln. Die nach 1 bzw. 1a erhaltenen Beschichtungen werden nach dem Trocknen (gewickelt) zu prismatischen oder Wickelzellen verarbeitet, wobei als Zwischenlage ein sog. Separator z. B. aus Cellgard o.ä. mit porösen Strukturen verwendet wird, ein derart hergestelltes System wird eingehaust und vor dem Verschließen mit (Elektrolyt) Leitsalzlösung (d. h. Leitsalz gelöst in aprotischen Lösungsmitteln) gefüllt. (z. B. durch Anlegen von Vakuum).

Der Bellcore-Prozeß (1b) ist eine weitere Variante der Beschichtungstechnik, hier wurde schon in die Anoden- bzw. Kathodenmasse eine Komponente (Dibutylphthalat DBP z.B.) mit eingearbeitet, die vor der Zusammenführung von Anode/Kathode/Separator im sog. Bellcore-Prozeß (vgl. Lit 2) herausgelöst wird, um ausreichende Porosität d. h. Aufnahmevermögen für die Leitsalziösung (Elektrolyt) zu schaffen.

Ein grundsätzlich anderer Prozeß (2) ist die Extrusion z. B. vom Separator (PolymerGelElektrolyt) und z. B. einer Kathode (US Pat 4818643, EP 015498B1) bzw. die Extrusion von Anode, Separator und Kathode in parallel geschalteten Extrudern und nachfolgendem Zusammenführen (DEO10020031) Coextrusion entsp. der Lit. Polymeric (Materials and Processing edit, J. M. Charrier, Hanser Verlag Munich 1990 p 387/388).

Die bislang beschriebenen Verfahren haben allesamt, wenn auch unterschiedliche Nachteile: Bei den Beschichtungsprozessen (1 -1a) muß in allen Fällen das organische Lösungsmittel bzw. das Wasser (eingeschleppt durch die Polymerlösung bzw. Dispersion) beseitigt werden. Verbleibendes Lösungsmittel führt zum "Fading", d. h. Nachlassen der Batterie-Effizienz und mangelndes Zyklenstabilität, das organische Lösungsmittel muß aus Kostengründen und zum Umweltschutz entfernt werden, das bedeutet hohe Trocknungstemperaturen bzw. beim Konti-Prozeß längere Trocknungszeiten bei niederen Trocknungstemperaturen und Vakuum, analoges gilt für die Abtrennung von Wasser. Nachteile entstehen im Film: Inhomogenitäten, Rißbildung beim engen Wickeln, verminderte Haftung auf den Stromkollektoren, Schädigung der Stromkollektoren, Unterwanderung des Films durch den Elektrolyten, u. ä..

Bei der Befüllung mit dem Elektrolyten erfolgt nur mangelnde Benetzung der Anoden- bzw. Kathodenmasse.

Beim Prozeß 1b ist die Porosität zur Aufnahme des Elektrolyten gegeben, jedoch gelten alle anderen bei 1 - 1a genannten Nachteile auch für 1b.

Bei (2) dem Extruderprozeß wird u. a. Polyethylenoxid (PEO) verwendet (US Pat 4818643), das jedoch beim Batteriebetrieb keine Langzeitstabilität aufweist, d. h. Zyklenstabilität < 100. Der andere Extruderprozeß arbeitet vgl. Beispiele mit Elektrolyten auf Basis von EC/γ-BL (d. h. Ethylencarbonat, γ-Butyrolacton) mit LiClO4 als Leitsalz, auch dieses System zeigt geringe Zyklenstabilität < 100, da unter den Betriebsbedingungen der Batterie das γ-BLreagiert und störende Nebenprodukte liefert; auch das beanspruchte Polymer PMM (Polymethylacrylat) ist ebenfalls nicht stabil und führt zu störenden Nebenreaktionen. Die in den Beispielen genannten Rezepturen für Anode, Kathode und Separator (Polymer Gel Elektrolyt) und das im Beispiel (1) zitierte Verfahren führen zu keiner funktionstüchtigen Batterie mit den offenbarten Daten.

Die WO 97/44847 bezieht sich auf ein kontinuierliches Verfahren zur Herstellung einer Lithiumsekundärbatterie. Die Festpolymerelektrolyten werden mit dem Aktivelektrodenmaterial in einem kontinuierlichen, Einschrittverfahren extrudiert, um Komposit-Elektrolyt-Elektroden zu bilden. Dabei besteht der Elektroden-Festelektrolyt Komposit für die Kathode unter anderem aus Metallchalkogeniden, Polymerbinder, Flüssigkeit und Elektrolytsalz, für die Anode unter anderem aus interkalierbarem Kohlenstoff, Polymerbinder, Flüssigkeit und Elektrolytsalz.

Die vorliegende Erfindung vermeidet die Nachteile der bekannten Verfahren durch ein neues Verfahrenskonzept mit neuen Komponenten.

Die vorliegende Erfindung löst die erfindungsgemäße Aufgabe durch das Verfahren gemäß dem Patentanspruch 1. Weitere Ausführungsformen sind in den abhängigen Patentansprüchen dargelegt.
1. Elektrodenmassen und Separator werden durch Flüssigbeschichtung bzw. Flüssigextrusion hergestellt, d. h. die Massen enthalten den Elektrolyten und das jeweilige optimale Leitsalz.
2. Vor der Verarbeitung, d. h. Flüssigbeschichtung, Flüssigextrusion, werden die Anodenmassen wie auch die Kathodenmassen auch anderen Einsatzstoffen zugeführt, d. h.
   a) Staubanteile mit Partikelgrößen < 6 µm werden ausgesiebt
   b) die Materialien werden im Vakuum entgast und dadurch von adsorbierter Luft und Sauerstoff befreit
   c) die Verarbeitung erfolgt unter Argon
   d) das Anodenmaterial, d. h. Li-interkalierbare Kohlenstoffe werden vor dem Einsatz mit Li-n-Butyl behandelt.
   e) durch Vermahlen erfolgt jeweils eine innige Vermischung und Benetzung der Eläktrodenmassen mit Leitsalz und Elektrolyt (aprotisches Lösungsmittel).

### Aktiv-Komponenten

Für die Anode (AM):
Graphit natürlich, gemahlen, ungemahlen, modifiziert. Graphit synth., Mesophasen, Microbeads, Graphene, Polyphenylene, Polyacetylene: allesamt C-Materialien, die mit Li - Interkalate bilden können.

Für die Kathode: Ni, Co, Cr, Mo, W, Mn, Ti, Zr-Oxide u. ä. Schwermetalloxide, die mit Li - Interkalate bilden können.

Die Aktiv-Komponenten der Elektrodenmassen werden nach dem Evakuieren mit Leitsalz, Leitsalzadditiven und/oder Lösungsmitteln benetzt bzw. durchtränkt, z. B. durch intensives Mahlen oder Rühren, gegebenenfalls bei erhöhten Temperaturen - vorzugsweise bis zu 100 °C. Alle Arbeiten erfolgen unter Argon.

Als Leitsalze kommen in Frage: (vgl. Lit 1 - Einleitung) LiPF₆, LiCF₃SO₃, Li[N(SO₂CF₃)₂], Li[C(SO₂CF₃)₃], LiOB (Lioxalatoborat) bzw. andere Organo Li-borate u. ä. Leitsalzadditive sind: Organische Salze der oben angeführten Leitwalzen bei denen Li durch einen organischen Rest z. B. Imidazolyl⁺ ersetzt ist, ferner Liacetylacetonat, Limetaborat, Lisilikate auch natürliche wie Spodumen, Petalit, Lepidolith, Kryolithionit, ferner Kohlenstofffasern oder -pulver, die mit Li-Salzen getränkt bzw. ummantelt sind, ferner MgO, BaO, Al₂O₃ o.ä., wie Schichtsilikate z. B. Serpentin und/oder Gerüstsilikate, wie Zeolithe, die als Säurefänger, Wasseradsorber oder Depot für Leitsalze, Lösungsmittel bzw. Elektrolyte wirken.

Erfindungsgemäße Lösungsmittel (vgl. Lit 1) sind:
Carbonate: Diethyl-, DEC, Dimethyl-, DMC, Ethyl-Methyl-, EMC, Ethylen-, EC, Propylen-, PC u.ä. z. B. Methoxiethylmethylcarbonat.

Glykolether: Dimethoxiethan, DME und Homologe Oxazolidinone: subst. Harnstoffe sowie Fluorether (niedermolekular mit Molmassen bis zu 1500) und Fluoralkylmethacrylsäureester und Analoge wie: geeignete Fluorderivate sind ungesättigte, polymerisierbare Verbindungen der allgemeinen Formel I CH₂ =C (R₁) - COO - R₂
R₁ = H, vorzugsweise CH₃
R₂ = PerBuoralkyle oder
z. B. Heptafluorobutylmethacrylat (2,2,3,3,4,4,4) alkylether mit C₂ bis C₂₀
Hexafluorobutylmethacrylat (2,2,3,4,4,4)
Hexafluoroisopropylmethacrylat (1,1,1,3,3,3)
Perfluoroctylmethacrylat
Octafluoropentylmethacrylat (2,2,3,3,4,4,5,5)
Perfluoroundecylmethacrylat
Trifluoromethoximethylacrylat CH = C (CH₃) -COO CH₂CH₂ - O - CF₃
ferner spezielle Monomere mit Ether- bzw. Carbonat-Resten wie Methoximethylmethacrylat (CH₂ = C (CH₃) - COÖ CH₂CH₂ - 0-CH₃) oder z. B. Diacrylate(methacrylate) Hexafluoro 1,5-pentandiyldimethacrylat
CH₂ = C (CH₃) - COO CH₂ (CF₂)₃ CH₂ - OOC - C (CH₃) = CH₂ und/oder Monomere wie Vinylpyridin, Vinylpyrrolidon o. ä.

### Präparation der Aktiv-Komponente der Elektrodenmasse:

Die Verarbeitung erfolgt unter Ausschluß von Luft (Sauerstoff und auch Stickstoff), als Schutzgas wird Argon bevorzugt.

Die Aktivkomponenten werden im Vakuum bei Temperaturen zwischen-20 und 200 °C, vorzugsweise von RT bis 100°C entgast, bei Drücken von 2 bis 10⁻⁴ Torr, vorzugsweise bei 2 bis 10⁻² Torr, bevor sie mit LS, LSA bzw. LM kontaminiert werden.

Zur intensiven Durchmischung dienen übliche Mahl-, bzw. Mischwerkzeuge aber auch Ultraschallgeräte. Wesentliches Merkmal ist das Herstellen von "Batches".

(Lit. Ullmann's Encyclopedia of Industrial Chemistry, B. 2. 5-1 bis 5-38, 7-1 bis 7-36, 24-1, 25-1 bis 25-31 bis 27-16 [1988], VCH Weinheim)

Modifizierungen der Li-interkalierbaren Kohlenstoffe mit Li-Alkylen sind Voraussetzung für die Verwendung dieser Komponenten. Einzelheiten zur Darstellung der Aktiven Komponenten der Elektrodenmassen werden in den Beispielen mitgeteilt.

### Polymerbinder:

Die Polymerbinder sind Netzwerke (Gewebe) o.ä., die vorzugsweise elektrisch leitfähig sein sollten Leitsalze, Additive und Lösungsmittel inkorporiert enthalten oder eine Ummantelung aus Leitsalz, Additiv gegebenenfalls in Kombination mit dem Lösungsmittel besitzen.

Die Polymerbinder sind Polymere mit Molmassen von 20 000 bis 2 Millionen, vorzugsweise von 30 000 bis 500 000.

In Frage kommen Polyolefine, Polyethylen, Polypropylen, Polybutene sowie deren Copolymere, vorzugsweise mit Olefinen oder Acryl-/Methacrylsäureestern mit Alkylestergruppen C>3, ferner Polyvinylether, sowie Polystyrol und Copolymere mit Butadien bzw. Isopren, vorzugsweise Blockcopolymere, die anionisch hergestellt werden, außerdem Kautschuk z. B. Butylkautschuk und/oder SB-Rubber bzw. Polydiene (hergestellt mit Ziegler/Natta Katalysatoren: Lit. H.G. Elias Makromoleküle Bd. 2, S. 141 [1992] Verlag Hüthig u. Wepf - Basel), ferner Fluorelastomere vorzugsweise Co- bzw. Terpolymere auf Basis von PVDF, HFP, TFE und/oder Perfluor-alkoxy-Derivaten (Lit. Ullmann's Encyclopedia of Industrial Chemistry Vol A 11, p 402 - 427, Verlag VCH - Weinheim 1988), außerdem kommen Polyether, hergestellt aus Ethylen-, Propen-, Butenoxid als Homo- und/oder Copolymer mit verkappten Endgruppen - in Frage, auch Polyvinylpyrrolidon und Copolymere z. B. Vinylimidazol oder Methacrylsäureestem oder Vinylcaprolactam verdienen Interesse. Nach dem erfindungsgemäßen Verfahren werden die oben aufgeführten Polymerbinder durch Abmischen z. B. mit Leitfähigkeitsruß als elektrisch leitfähige Polymere im Li-BatterieSystem eingesetzt.

Das Herstellen der erfindungsgemäßen Polymerbinder erfolgt durch Inkorporieren oder Ummanteln. Beispielsweise wird Styroflex® Styrol/Butadien/Styrol Dreiblockpolymerisat mit 30 Gew% Kohlenstofffasern (Lit. Ullmann's Encyclopedia of Industrial Chemistry Vol A 11 p 42-64) gefüllt und dann mit einer Beschichtung aus (10 Gew%) Polyvinylpyrrolidon (Luviskol) in 1 M LiOB/Dimethoxiethanlösung gecoatet und als Matrix für die aktive Anoden- bzw. Kathodenmasse verwendet, analog werden als PB Fluorelastomere wie Kynar 2801® und/oder Dyneon THV 200® verwendet; diese werden z. B. mit einer Lösung aus EC/PC 1:1 und LS: LiPF₆ (1M)mit LSA: MgO und gegebenenfalls Carbonfasem versetzt.

Werden intrinsich leitfähige Polymere wie Polyacetylen, Polypyrrol, Polyanilin oder auch Carbonfasern eingesetzt, so werden diese vorzugsweise mit Leitsalz + Lösungsmittel (LiOB + DMC/DEC) getränkt und dann als Gitter, Netz o.ä. zur Fixierung der Elektrodenmassen verwendet, gegebenenfalls auch in Kombination mit den anderen z. B. oben erwähnten Polymerbindern.

Der Separator ist eine Zwischenschicht, trennt Anode und Kathode als Folie, Netzgewebe, Vlies, Gewebe o.ä und wird entweder durch Flüssigbeschichtung oder Extrusion hergestellt oder eingesetzt.

Der Separator:
a) hat ausreichende Leitfähigkeit für den lonentransport der Leitsalz-Komponenten,
b) ist ein Leitsalz und Lösungsmittel-Depot
c) zeigt Flexibilität
d) dient als Schmelzsicherung bei Überlast
e) und zeigt keine Versagensmechanismen bei normalem Batteriebetrieb, der definierten Be- und Entladung.

Der Separator kann als separate Zwischenschicht verwendet werden, kann aber auch integrierter Bestandteil der Kathode bzw. Anode sein.

Der Separator besteht aus organischen Polymeren (vgl. Polymerbinder PB) mind. 1 Gew.% ungeblöhtern vorrichit Leitsalz, Leitsalzadditiven und Lösungsmitteln.

Für die erfindungsgemäße Verwendung werden poröse Strukturen bevorzugt.

Die Herstellung erfolgt durch Extrusion

Ableiter: Sie dienen zur Ableitung des in dem Batteriesystem erzeugten Stromes (zu + bzw. - Pol der Batterie); sie sollen feste Haftung mit den Elektrodenmassen haben und möglichst geringen elektrischen Übergangswiderstand zeigen.

Als Ableiter kommen Carbonfasern, Graphit, Elektrisch leitfähige Polymere und/oder Metalle in Frage, vorzugsweise ist der Kathodenableiter geprimert z. B. mit Ruß/Terpolymeren Dyneon THV. Wesentlich bei den Ableitern ist das Vorliegen einer aktiven fettfreien und belagfreien Oberfläche auf die dann der Primer bzw. die aktiven Elektrodenmassen aufgetragen werden. Die Primerschichten sind 0,1 bis 10 µm stark. Primerschichten werden erhalten durch -C-Plasma-Beschichtung, Auftragen von z. B. rußgefüllten Polymeren z. B. Kynar 2801 mit 30 Gew% Ruß in NMP, Polyacrylnitril mit 30 Gew% Ruß in DMF, Dyneon THV® 30 Gew% Ruß, wässrig, Polyvinylalkohol + 30 Gew% Ruß, wässrig (DMF = Dimethylformämid, NMP = N-Methylpyrrolidon).

Das erfindungsgemäße Verfahren beruht auf der Beschichtungs- bzw. Extrusionstechnologie bei der alle erforderlichen Komponenten für die jeweiligen Elektroden bzw. auch für den Separator als streichfähige, beschichtungsfähige bzw. extrusionsfähige Gemische mit Lösungsmittel, Leitsalz, Additiven und den Aktivkomponenten (Li-interkalierbaren Kohleristoffen bzw. Li-interkalierbaren Schwermetalloxiden) vorliegen und in einem kontinuierlichen, vorzugsweise einstufigem Prozeß verarbeitet werden, wobei die Monomeren polymerisieren und sich verfestigen. Die Gemische sind Dispersionen bzw. streichfähige Pasten, die bei Raumtemperatur auf die geprimerten Ableiter aufgetragen werden, z. B. Cu-Folie geprimert - wird mit der Anodenmasse beschichtet (15-40 µm stark), dann mit dem Separator die Kathodenmasse aufgetragen (15 - 40 µm stark) und zum Abschluß der Kathodenableiter (Al-Folie geprimert mit Dyneon THV/Ruß) aufgelegt. Das entstandene Verbindungssystem wird laminiert und gewickelt, eingehaust, gepolt usw. zu verkaufsfähigen, wiederaufladbaren Li-Batterien verarbeitet.

Der Herstellprozeß kann auch so gestaltet werden, daß eine doppelseitige Beschichtung erfolgen kann bzw., daß parallel Anoden- bzw. Kathodenableiter beschichtet werden und dann der Separator als isolierende Zwischenschicht - als Folie getränkt mit Leitsalz und Lösungsmittel oder als Beschichtungslaminat in den Verbund integriert wird.

Ein wesentlicher Vorteil des Verfahrens liegt auch in der Verwendung geringer Mengen von Vermiculit, der beim Laminieren unter erhöhten Temperaturen aufbläht und so für zusätzliche porige Struktur- mit verbesserten Migrationsbedingungen für die "elektrische" Transportvorgänge sorgt.

### Beispiele:

### Die Anodenmassen enthalten:

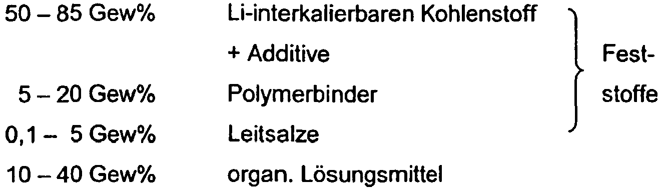

### Der Separator (als Gelelektrolyt):

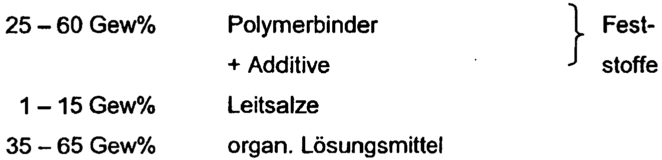

### Die Kathodenmassen enthalten:

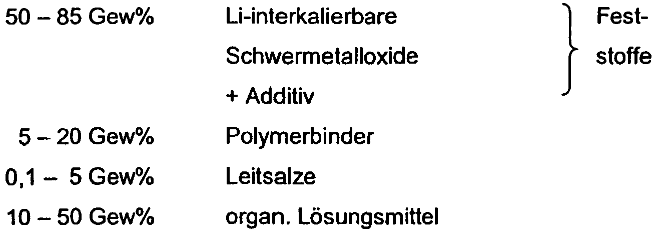

Organische Lösungsmittel sind vorzugsweise aprotische Lösungsmittel, die als Lösungsmittel für die Leitsalze aber auch als Quellmittel für die Polymerbinder in Frage kommen, ferner polymerisierbare Monomere bzw. fluorenthaltende Flammschutzmittel.

Im folgenden werden einige der erfindungsgemäßen Beschichtungsmassen beschrieben: Die Separatormassen (im Feststoffanteil inbegriffen) enthalten mindestens 1 Gew%. Vermiculit (ungebläht).

Sämtliche Verbunde aus Anode, Separator und Kathode enthalten außerdem in mindestens 1 Komponente ungesättigte, vernetzbare, reaktive Doppelbindungen enthaltende Wirkstoffe.

### Anodenmasse AM I

| | | | | Gew% |
|---|---|---|---|---|
| 1. | Polymerbinder: | | Kynar 2801® + Divinylbenzol | 4 + 1 |
| 2. | Polyether: | | Polyox WSR 301®* | 3 |
| 3. | Graphit (synth.): | | MCMB® | 3 |
| 4. | Additiv: | | MgO | 2 |
| | | | Vermiculit (ungebläht) | 1 |
| 5. | Lösungsmittel: | | Ethylencarbonat EC | 5 |
| 6. | Graphit (nat.): | | UF8® | 65 |
| 7. | Lösungsmittel: | a) | Perfluoroetylmethacrylat | 2 |
| | | b) | Diethylcarbonat:DEC | 4 |
| | | c) | Dimethylcarbonat:DMC | 3 |
| 8. | Leitsalz: | | Litriflate | 8 |

| | | | | |
|---|---|---|---|---|
| *Der Ether wurde vor der Verwendung mit Dimethylsulfat verkappt, d. h. die vorliegenden - OH Gruppen wurden in -OCH3 Endgruppen umgewandelt. | | | | |

Die Komponenten 1, 3 und 4. werden bei R.T. intensiv gemischt (2 h) und dann mit 4, 5, 7a, 7b, 7c vermischt (R.T., 1 h).

Parallel wird der Graphit (6) vorgelegt, mit dem Leitsalz (8) versetzt und ca. 30 Min bei R.T. gemahlen, dann wird nacheinander der verkappte Polyether und das Lösungsmittel (7c) zugesetzt und weitere 1 ½ h gerührt (R.T.). Die verwendeten Graphite (3) sowie (6) wurden vor dem Einsatz bei 10⁻² Torr und 100 °C entgast und anschließend unter Argon weiterverarbeitet.

### Anodenmasse AM II

Statt Polyether (2) wird Poly-n-Hexylmethacrylat Molmasse 30 - 50 000 verwendet.

Die Arbeiten erfolgen unter Argon, die Graphite werden im Vakuum bei 100 °C und 0,1 Torr ausgeheizt und dann bei R. T. mit n-Butyllithium (5%ig in n-Hexan) umgesetzt (auf 100 g Graphit 10 ml n-BuLi Lösung anschließend erneut aufgeheizt, entgast und wie oben und weiterverarbeitet.

### Anodenmasse AM III

Als Leitsalz werden 7 Gew% LiPF₆ und 1 Gew% MgO eingesetzt.

### Anodenmasse AM IV

Als Leitsalz wird Lioxalatoborat LiOB 8 Gew% verwendet und statt Divinylbenzol 1 Gew% wird Vinylpyrrolidon eingesetzt.

### Anodenmasse AM V

Als Polymerbinder (1) werden 4 Gew% Dyneon THV gequollen mit 1 Gew% Hexafluoro 1,5 pentandiyldimethacrylat verwendet und mit 10 Gew% Graphit (6) UF8® versetzt und bei 50 °C, 60 Min. innig vermahlen (Argon-Schutzatmosphäre), dann werden 5 Gew% (2) Polyox WSR 301®, der mit Methacrylsäuregruppen an den endständigen OH-Gruppen verestert wurde und 8 Gew% Leitsalz (8) LiPF₆ zugefügt und erneut 60 Min. vermahlen, anschließend werden 60 Teile Graphit (6) UF8® und die Lösungsmittel (7a - 7 c) + (5) sowie das Leitsalzadditiv 1 Gew% Liacetylacetonat in das Mahlgut gegeben und erneut 60 Min. bei 50 °C gemahlen.

Anschließend wird das Mahlgut aus einem Collinextruder bei 65 - 70°C aus einer Breitschlitzdüse auf eine geprimerte Cu-Folie extrudiert: Dicke 30 - 40 µm und durch anschließendes Laminieren auf 25 - 30 µm verdichtet.

Alle Arbeiten erfolgen unter Argon als Schutzgas, die verwendeten Graphite wurden vor der Verwendung bei 100 °C. 3 h bei 0,1 Torr entgast und mit Li-n-Butyl entspr. Anodenmasse AM II behandelt.

### Anodenmasse AM VI

Entsprechend AM I als Lösungsmittel 7a (2 Gew%) wird Ethylenglykoldialkylether verwendet.

Alle verwendeten Graphite hatten einen Aschegehalt (DIN 51903, 800 °C) < 0,01% und enthielten keine Partikel < 6 µm.

### Kathodenmasse KMI

| | | | | Gew% |
|---|---|---|---|---|
| 1. | Li Interkalat Metalloxid: | | CoOxid | 70 |
| 2. | Polymerbinder: | | Kynar 2801® | 6 |
| 3. | Polymeradditiv | | Luviskol® | 1 (Molmasse 5-10 000) |
| 3. | a Monomer: | | Ethylenglykoldimethacrylat | 2 |
| 4. | Leitsalz: | | Lioxalatoborat | 7 |
| 5. | Additiv: | | | - |
| 6. | Lösungsmittel: | a) | DME Dimethoxiethan | 1 |
| | | b) | EC Ethylcarbonat | 6 |
| | | c) | DEC Diethylcarbonat | 4 |
| | | d) | DMC Dimethylcarbonat | 2 |

Die Kathodenmasse KM I wird hergestellt durch Abmischen von LiCoOxid (1) mit Lioxalatoborat dann wird die Mischung von Polymerbinder (2), Polymeradditiv (3), Monomer (3a) und den Lösungsmitteln (6a - 6d), zugefügt und noch intensiv 2 h bei R.T. gemischt.

### Kathodenmasse KMII

Als Li-interkaliertes Metalloxid (1) wird ein Gemisch LiNiOxyd LiCoOxyd (Gewicht 1:1) verwendet.

### Kathodenmasse KM III

Als Leitsalz (4) wird Li(trifluoromethylsulfonyl)imid Li[N(SO₂CF₃)₂] und als Leitsalzadditiv Al₂O₃ verwendet.

### Kathodenmasse KM IV

Als Li-interkaliertes Metalloxid (1) wird Spinell MnOxid verwendet, und zwar 65 Gew%, das LiMnOxid wird dann mit 5 Gew% Ensaco Ruß und dem Leitsalz (4) sowie dem Lösungsmittel (6 b) EC versetzt und 30 Min. bei R.T. in einer Kugelmühle gemahlen, anschließend wird die Mischung aus den restlichen Ansatzbestandteilen: Monomer (3a) Polymerbinder (2), Polymeradditiv (3), und den Lösungsmitteln (6 a, 6 c, 6 d) zugefügt und 60 Min bei R. T. (40 V/Min) gemischt.

Alle Schwermetalloxide wurden entgast 10-1 Torr, 1 h 100°C und unter Argon verarbeitet. Mikropartikel < 6 µm wurden ausgesiebt.

### Separatormassen

sind Schichten zwischen Anode und Kathode und bestehen aus Polymeren mit poröser Struktur, die als Gewebe, Vliese, Netze, perforierte Folien o. ä. vorliegen und eine Dicke von 10-30 µm, vorzugsweise von 5 - 20 µm aufweisen. Die Materialien können organischer oder anorganischer Natur sein, gegebenenfalls sind es Gemische; eine geeignete Form des Separators sind Sol-Gel-Überzüge bzw. Beschichtungen, die auf die Anoden- bzw. Kathodenmasse - auch auf beiden - aufgebracht werden und dann beim Zusammenfügen die Separatorschicht S zwischen Anode und Kathode bilden.

Eine bevorzugte Form des Separators sind extrudierte Folien in den angegebenen Dicken, die in Anoden- bzw. Kathodenmassen auch durch Extrusion herstellbar sind und dann durch Coextrusion zu Verbundsystemen entsprechend den Anordnungen Bild 2a/2b zusammengeführt werden (Lit. L.M. Carrier: Polymeric materials and processing, Hanser Verlag Munich [1990] p 387).

Die obige Literaturstelle zeigt Anordnungen für die Coextrusion und das Zusammenführen der einzelnen Extrudate zu einem einheitlichen Verbundsystem.

Bei den extrudierten Separatoren werden Polymere z. B. Fluorelastomere auf Basis von Tetrafluorethylen, Hexafluorpropen sowie Vinylidenfluorid als Bi oder Terpolymer z. B. Kynar 2801®, Dyneon THV 120 ® o. ä. Polyvinylpyrrolidon, Polyether u.ä. Polymere, die mit den Lösungsmitteln auf Basis von Alkylcarbonaten oder niedermolekularen Glykolethern; oder Polyfluorethern gequollen sind verwendet.

Der Anteil der Polymeren beträgt 5-20 Gew%, der der Lösungsmittel 10-50 Gew% jeweils bezogen auf das Gesamtgewicht des Separators.

Als Leitsalze, die in Mengen von 1-15 Gew% Verwendung finden, kommen die unter den Anoden- und Kathodenmassen aufgezählten Verbindungen in Frage.

Als Leitsalz-Additiv sind MgO, Al₂O₃. SiO₂ und Gerüstsubstanzen wie Kaoline, Zeolithe, Serpentine sowie Vermiculit gebläht und ungebläht bevorzugt.

### Separator:

Zur Herstellung der Separatormassen werden Polymeren z. B. Kynar 2801® + Polyvinylpyrrolidon (Molmasse 5000) mit Ethylencarbonat und Propylencarbonat versetzt und in einem Voith-Mischer bei 100 °C gemischt, 60 Min. Schutzgas Argon, anschließend wird abgekühlt auf R. T. und die Masse granuliert, dann wird dieses Granulat in einem Collin-Extruder eingetragen (Einfüllstutzen 1) und bei Temp. von 85 - 90 °C extrudiert, gleichzeitig wird eine Mischung aus Diethylcarbonat / LiPF₆ /MgO und Vermiculit (ungebläht) unter Rühren in den 2. Einfüllstutzen des Extruders eindosiert und das Gemenge bei Verweilzeiten von ca. 2 Minuten über eine Breitschlitzdüse 15 cm breit als Folie von 30 - 35 µm Dicke ausgetragen und als Zwischenschicht zwischen Anode und Kathode, die mit Ableiterfolien versehen sind in einem Laminator zusammengeführt und zu einem Verbundsystem verdichtet.

Sämtliche Separatorenmassen SI-S-VII 1 enthalten Gew% Vermiculit (ungebläht)

### Beispiel 1

Die Anodenmasse AM II - wurde unter Schutzgas (Ar) in einem Collin-Extruder bei Temperaturen von 40 - 45 °C über eine Breitschlitzdüse 150 mm breit, 15 - 20 µm dick direkt auf eine Cu-Folie (9 µm stark)aufgetragen und bei 80°C laminiert.

Das erhaltene System aus Cu-Ableiter mit Anodenmasse wurde in einem weiteren Schritt mit einem Separator S I und der aufgeprimerten Al aufgebrachten Kathodenmasse KM I zu einem Batterieverbundsystem zusammengeführt und bei 80 °C laminiert.

### Beispiel 2

Das entsprechend Bsp. 1 hergestellte Verbundsystem wird zu einem Wickel verarbeitet, eingehaust und durch Laserschweißen der Elektrodenableiter zu + bzw. - Pol zu einer gebrauchsfähigen Batterie. Der ∅ der Batterie beträgt 8 cm, die Ladung erfolgt galvanostatisch (Digatron Ladegerät) 1. Stufe bis ca. 3 Volt, dann bis 3,5 und zum Schluß bis 4.1 Volt, jeweils mit 0,15 mA/cm².

Die Entladung erfolgt mit 0,15 mA/cm². Die Entladekapazität beträgt 43 Ah, bei einer Aktivfläche von 1,5 m².

Die Cyclenstabilität liegt bei> 300, das "Fading" ~ 1 %.

**Tabelle 1**

| Beispiel | 3 | 4 | 5 | 6 | 7 | 8 |
|---|---|---|---|---|---|---|
| Anodenmasse AM | I | II | III | IV | V | I |
| Kathodenmasse KM | I | II | III | IV | I | I |
| Separator S | I | III | IV | V | VI | VI |
| Entladekapazität (Ah) | 43 | 42 | 44 | 42 | 42 | 42 |
| Cyclenstabilität | > 300 | > 300 | > 300 | >300 | > 300 | > 350 |
| Fading | ~1% | ~1% | 1% | ~1-2% | < 1 % | <2% |

Die Verarbeitung erfolgt entsprechend der Beispiele 1 - 2 als Separator wurde benutzt, Angaben in (.) sind Gewichtsteile

| | | | | | | |
|---|---|---|---|---|---|---|
| S | I | Kynar 2801 (30) | Polymethylmetha crylat (5) | MgO (9) | 0,5 LiOB in EC/PC | (55) |
| S | II | Kynar 2801 (30), | Styroflex (2) | MgO (3) | 1M LiPF₆ in EC/DC | (64) |
| S | III | Dyneon THV 200 (32) | | MgO (7) | 1 M LiPF₆ in EC/DC | (60) |
| S | IV | Polypropylen (20) | Polyvinylpyrrolidon (10) | MgO (9) | 1 M LiPF₆ in EC/DC | (60) |
| S | V | Kynar 2801 (30) | Styroflex (2) | Li acac (7) | 0,5 M LiOB in DME | (60) |
| S | VI | Kynar 2801 (30) | Al2O3 (5) | LiOB (4) | 1 M Litriflat in EC/DC | (60) |
| S | VII | Kynar 2801 (30) | Styroflex (5) | MgO (4) | 1 M LiPF₆ in EC/DC | (60) |

| | | | | | | |
|---|---|---|---|---|---|---|
| EC/PGVolumen 1 : 1, EC/DC Volumen 1 : 1 | | | | | | |

### Vergleichsbeispiele:

Wird nicht unter den erfindungsgemäßen Bedingungen gearbeitet, d. h.
1. Entgasen der Aktiven Massen.
2. Intensives Vermischen der Einsatzstoffe unter Schutzgas (Argon).
3. Separates zweistufiges Mischen der Aktiv-Komponenten, so werden Cyclenstabilitäten. von nur 50 -150 erreicht bei einem Fading > 2,5 %.

## Patentansprüche

1. Verfahren zur Herstellung von Speichern für elektrische Energie, wobei eine Anodenmasse aus Lithium-interkalierbaren Kohlenstoffen, die mit Lithium-Alkylen modifiziert sind, als Anodenaktivmasse im Gemisch mit Leitsalz, Leitsalzadditiv, Polymerbinder und/oder organischem Lösungsmittel sowie eine Kathodenmasse aus Lithium-interkalierbaren Schwermetalloxiden als Kathodenaktivmasse im Gemisch mit Leitsalz, Leitsalzadditiv, Polymerbinder und/oder organischem Lösungsmittel bereitgestellt wird, wobei die Elektroden-Aktivkomponenten zunächst bei Temperaturen zwischen -20 und 200°C und Drücken von 2 bis 10⁻⁴ Torr entgast und dann unter Luftausschluss mit Polymerbinder, Leitsalz, Leitsalzadditiv und/oder organischem Lösungsmittel intensiv vermahlen oder gerührt werden, die Anodenmasse, die Kathodenmasse sowie eine mindestens 1-Gew.% ungeblähten Vermiculit enthaltende Separatormasse, die als extrusionsfähiges Gemisch mit organischem Lösungsmittel, Leitsalz, Additiven und Polymeren vorliegt, kontinuierlich co-extrudiert werden, so dass die Kathoden- und Anodenmassen mit der Separatormasse als Zwischenschicht zu einem Verbundsystem angeordnet werden, wobei die Anodenmasse wie auch die Kathodenmasse auf jeweilige Stromableiter aufgetragen werden.

2. Verfahren nach Anspruch 1, **dadurch gekennzeichnet, dass** die Arbeiten in Gegenwart von Perfluoralkylethern durchgeführt werden.

3. Verfahren nach Anspruch 1 oder 2, **dadurch gekennzeichnet, dass** als aktive Elektrodenmassen für die Anode Li-interkalierbare synthetische und/oder natürliche Graphite, und/oder Graphene, Polyphenylene, Polyacetylene oder Nano-dimensionierte Carbonfasern in Mengen von 50-85 Gew.-% zur Anwendung gelangen.

4. Verfahren nach einem der Ansprüche 1 bis 3, **dadurch gekennzeichnet, dass** als aktive Elektrodenmassen für die Kathode Li-interkalierbare Oxide des Ti, Zr, V, Cr, Mo, W, Mn, Co, Ni für sich oder im Gemisch angewendet werden, wobei die Interkalations-Verbindungen in orientierter Form mit verzerrten Gitterstrukturen vorliegen und in Mengen von 50-85 Gew.-% eingesetzt werden.

5. Verfahren nach einem der vorhergehenden Ansprüche, **dadurch gekennzeichnet, dass** als Leitsalze Li-Verbindungen in Mengen von 10 bis 100%, bezogen auf die jeweiligen aktiven Elektrodenmaterialien, zur Anwendung kommen.

6. Verfahren nach einem der vorhergehenden Ansprüche, **dadurch gekennzeichnet, dass** als Additive Li-Verbindungen, Gerüstsubstanzen sowie Carbonfasern und/oder Kohlenstoffpulver eingesetzt werden.

7. Verfahren nach Anspruch 6, **dadurch gekennzeichnet, dass** die Additive mit Li-Salzen getränkt oder ummantelt werden.

8. Verfahren nach Anspruch 6 oder 7, **dadurch gekennzeichnet, dass** die Additive in Mengen von 0,1 bis 30%, bezogen auf die Leitsalze, eingesetzt werden.

9. Verfahren nach einem der Ansprüche 1 bis 8, **dadurch gekennzeichnet, dass** als Lösungsmittel zum Lösen oder Dispergieren der Leitsalze bzw. der Additive und zum Quellen der organischen Polymeren: Alkylcarbonate, Glykolether, substituierte und/oder cyclische Harnstoffe, Fluorether, jeweils mit Molmassen bis zu 1500 oder Monomere mit Perfluoralkylresten oder Ether- oder Carbonatalkylresten verwendet werden.

10. Verfahren nach Anspruch 9, **dadurch gekennzeichnet, dass** das Lösungsmittel in Mengen von 1 bis 1000%, bezogen auf die eingesetzten Leitsalze, verwendet werden.

11. Verfahren nach einem der vorhergehenden Ansprüche, **dadurch gekennzeichnet, dass** der Polymerbinder PB, Polyolefine, Polyethylen, Polypyrrolidon, Polybutene sowie deren Homologe und Copolymere, Polyvinylether, Polystyrol und Copolymere mit Butadien bzw. Isopren, Blockpolymere, SBR-Kautschuk, Butylkautschuk, Cis- und/oder 1,2-Polybutadiene, Fluorelastomere, Co- bzw. Terpolymere auf Basis von Vinylidenfluorid, Hexafluorpropen, Tetrafluorethen und/oder Perfluoralkoxy-Derivaten, ferner Polyalkylenoxide mit verkappten Endgruppen und cyclische Ether umfasst.

12. Verfahren nach Anspruch 11, **dadurch gekennzeichnet, dass** der Polymerbinder in Mengen von 5 bis 30 Gew.-%, bezogen auf die jeweiligen aktiven Elektrodenmassen, eingesetzt wird.

13. Verfahren nach einem der vorhergehenden Ansprüche, **dadurch gekennzeichnet, dass** die Herstellung der Elektrodenmassen stufenweise erfolgt, so dass die jeweiligen aktiven Komponenten mit anteiligen Mengen an Leitsalz, Additiv und Lösungsmittel innig vermischt und/oder gemahlen werden und dann mit den anderen Elektrodenkomponenten compoundiert werden.

14. Verfahren nach Anspruch 13, **dadurch gekennzeichnet, dass** die Vermischung und/oder Vermahlung im Wirbelbett oder Ultraschallbad erfolgt.

15. Verfahren nach Anspruch 13 oder 14, **dadurch gekennzeichnet, dass** die Vermischung und/oder Vermahlung bei Temperaturen von -20 bis 200°C erfolgt.

16. Verfahren nach einem der vorhergehenden Ansprüche, **dadurch gekennzeichnet, dass** die Herstellung des erfindungsgemäßen Verbundsystems aus Anode/Separator/Kathode dadurch erfolgt, dass die Elektrodenmasse wie auch die Separatormasse in einem kontinuierlichen, einstufigen Prozess verarbeitet werden.

17. Verfahren nach Anspruch 16, **dadurch gekennzeichnet, dass** die Elektrodenmassen auf Ableiter, ausgewählt aus Metallfolien, Kohlenstofffaser-Geweben, Netzen, Polyacetylen-, Polypyrrolfolien, aufgetragen werden.

18. Verfahren nach Anspruch 17, **dadurch gekennzeichnet, dass** als Kathodenableiter geprimerte Al-Folie verwendet wird.

19. Verfahren nach einem der Ansprüche 17 oder 18, **dadurch gekennzeichnet, dass** die Beschichtung ein- oder zweiseitig erfolgt.

20. Verfahren nach einem der Ansprüche 17 bis 19, **dadurch gekennzeichnet, dass** das hergestellte Verbundsystem bei Temperaturen von Raumtemperatur bis zu 100°C laminiert wird.

21. Verfahren nach einem der vorhergehenden Ansprüche, **dadurch gekennzeichnet, dass** das Herstellen des Gesamtverbundes bestehend aus Ableitern, Elektrodenmassen mit der Separatorzwischenschicht kontinuierlich erfolgt und/oder das Herstellen einer Li-Polymer-Batterie durch Schichtung und/oder Wickeln mit anschließendem Einhausen und Polen erfolgt.

22. Verfahren nach einem der vorhergehenden Ansprüche, **dadurch gekennzeichnet, dass** die hergestellten Massen für elektrophoretische Systeme, Dioden oder Sensoren oder Energiespeicher eingesetzt werden.

## Claims

1. Process for producing storage means for electrical energy, wherein an anode composition composed of lithium-intercalatable carbons modified with lithium alkyls as an anode active composition in a mixture with conductive salt, conductive salt additive, polymer binder and/or organic solvent is provided, as is a cathode composition composed of lithium-intercalatable heavy metal oxides as a cathode active composition in a mixture with conductive salt, conductive salt additive, polymer binder and/or organic solvent, wherein the electrode active components are first degassed at temperatures between -20 and 200°C and pressures of 2 to 10⁻⁴ Torr, and then, with exclusion of air, ground or stirred vigorously with polymer binder, conductive salt, conductive salt additive and/or organic solvent, and the anode composition, the cathode composition and a separator composition which contains at least 1% by weight of unexpanded vermiculite and is present as an extrudable mixture with organic solvent, conductive salt, additives and polymers are coextruded continuously in such a way that the cathode and anode compositions are arranged with the separator composition as an intermediate layer to give a composite system, wherein the anode composition and the cathode composition are applied to respective output conductors.

2. Process according to Claim 1, **characterized in that** the operations are performed in the presence of perfluoroalkyl ethers.

3. Process according to Claim 1 or 2, **characterized in that** the active electrode compositions employed for the anode are Li-intercalatable synthetic and/or natural graphites, and/or graphenes, polyphenylenes, polyacetylenes or nanosize carbon fibres in amounts of 50-85% by weight.

4. Process according to any of Claims 1 to 3, **characterized in that** the active electrode compositions used for the cathode are Li-intercalatable oxides of Ti, Zr, V, Cr, Mo, W, Mn, Co, Ni alone or in a mixture, the intercalation compounds being in oriented form with distorted lattice structures and being used in amounts of 50-85% by weight.

5. Process according to any of the preceding claims, **characterized in that** the conductive salts employed are Li compounds in amounts of 10 to 100%, based on the respective active electrode materials.

6. Process according to any of the preceding claims, **characterized in that** the additives used are Li compounds, framework substances, and carbon fibres and/or carbon powders.

7. Process according to Claim 6, **characterized in that** the additives are impregnated or enveloped with Li salts.

8. Process according to Claim 6 or 7, **characterized in that** the additives are used in amounts of 0.1 to 30%, based on the conductive salts.

9. Process according to any of Claims 1 to 8, **characterized in that** the solvents used for dissolution or dispersion of the conductive salts or of the additives and for swelling of the organic polymers are:
alkyl carbonates, glycol ethers, substituted and/or cyclic ureas, fluoroethers, each having molar masses up to 1500, or monomers with perfluoroalkyl radicals or ether or alkyl carbonate radicals.

10. Process according to Claim 9, **characterized in that** the solvent is used in amounts of 1 to 1000%, based on the conductive salts used.

11. Process according to any of the preceding claims, **characterized in that** the polymer binder PB comprises polyolefins, polyethylene, polypyrrolidone, polybutenes and homologues and copolymers thereof, polyvinyl ethers, polystyrene and copolymers with butadiene or isoprene, block polymers, SBR rubber, butyl rubber, cis- and/or 1,2-polybutadienes, fluoroelastomers, co-or terpolymers based on vinylidene fluoride, hexafluoropropene, tetrafluoroethene and/or perfluoroalkoxy derivatives, and also polyalkylene oxides with capped end groups and cyclic ethers.

12. Process according to Claim 11, **characterized in that** the polymer binder is used in amounts of 5 to 30% by weight, based on the respective active electrode compositions.

13. Process according to any of the preceding claims, **characterized in that** the electrode compositions are produced stepwise, in such a way that the respective active components are intimately mixed and/or ground with proportionate amounts of conductive salt, additive and solvent, and then compounded with the other electrode components.

14. Process according to Claim 13, **characterized in that** the mixing and/or grinding is effected in a fluidized bed and/or ultrasound bath.

15. Process according to Claim 13 or 14, **characterized in that** the mixing and/or grinding is effected at temperatures of -20 to 200°C.

16. Process according to any of the preceding claims, **characterized in that** the inventive composite system composed of anode/separator/cathode is produced by processing the electrode composition and the separator composition in a continuous one-stage operation.

17. Process according to Claim 16, **characterized in that** the electrode compositions are applied to output conductors selected from metal foils, carbon fibre fabrics, meshes, polyacetylene films, polypyrrole films.

18. Process according to Claim 17, **characterized in that** the cathode output conductor used is primed Al foil.

19. Process according to either of Claims 17 and 18, **characterized in that** the coating is effected on one or two sides.

20. Process according to any of Claims 17 to 19, **characterized in that** the composite system produced is laminated at temperatures from room temperature up to 100°C.

21. Process according to any of the preceding claims, **characterized in that** the production of the overall composite consisting of output conductors, electrode compositions with the separator intermediate layer is effected continuously, and/or the production of an Li polymer battery is effected by layering and/or winding with subsequent encasing and poling.

22. Process according to any of the preceding claims, **characterized in that** the compositions produced are used for electrophoretic systems, diodes or sensors, or energy storage means.

## Revendications

1. Procédé de fabrication d'accumulateurs d'énergie électrique, où une masse anodique en carbones intercalables dans du lithium et modifiés par des alkyles de lithium est préparée en tant que masse active anodique en mélange avec du sel conducteur, un additif de sel conducteur, un liant polymère et/ou un solvant organique, et où une masse cathodique en oxydes de métaux lourds intercalables dans du lithium est préparée en tant que masse active cathodique en mélange avec du sel conducteur, un additif de sel conducteur, un liant polymère et/ou un solvant organique, où les composants actifs d'électrode sont d'abord dégazés à températures comprises entre -20 et 200°C et sous des pressions comprises entre 2 et 10⁻⁴ Torr avant d'être intensivement pulvérisés ou agités sous exclusion d'air avec un liant polymère, un sel conducteur, un additif de sel conducteur et/ou un solvant organique, la masse anodique, la masse cathodique ainsi qu'une masse de séparateur contenant au moins 1 % en poids de vermiculite non gonflée, présentée sous forme de mélange extrudable avec un solvant organique, un sel conducteur, des additifs et des polymères, étant coextrudés de manière continue, si bien que les masses cathodiques et anodiques sont disposées en formant un système composite avec la masse de séparateur comme couche intercalaire, la masse anodique ainsi que la masse cathodique étant appliquées sur des dérivateurs de courant correspondants.

2. Procédé selon la revendication 1, **caractérisé en ce que en ce que** les travaux sont effectués en présence d'éthers alkyles perfluorés.

3. Procédé selon la revendication 1 ou la revendication 2, **caractérisé en ce que** des graphites synthétiques et/ou naturels et/ou des graphènes, polyphénylènes, polyacétylènes ou des fibres de carbone nanodimensionnées intercalables dans du Li sont utilisés comme masses actives d'électrode pour l'anode dans des teneurs comprises entre 50 et 85 % en poids.

4. Procédé selon l'une des revendications 1 à 3, **caractérisé en ce que** des oxydes de Ti, Zr, V, Cr, Mo, W, Mn, Co, Ni intercalables dans du Li sont utilisés en tant que tels ou en mélanges comme masses actives d'électrode pour la cathode, les composés d'intercalation étant présentés sous forme orientée avec des structures de grilles déformées et mis en oeuvre dans des teneurs comprises entre 50 et 85 % en poids.

5. Procédé selon l'une des revendications précédentes, **caractérisé en ce que** des composés de Li sont utilisés comme sels conducteurs dans des teneurs comprises entre 10 et 100 % par rapport aux matériaux actifs d'électrode correspondants.

6. Procédé selon l'une des revendications précédentes, **caractérisé en ce que** des composés de Li, des matériaux d'ossature tels que des fibres de carbone et/ou des poudres de carbone sont utilisés comme additifs.

7. Procédé selon la revendication 6, **caractérisé en ce que** les additifs sont imprégnés ou enrobés de sels de Li.

8. Procédé selon la revendication 6 ou la revendication 7, **caractérisé en ce que** les additifs sont mis en oeuvre dans des teneurs comprises entre 0,1 et 30 % par rapport aux sels conducteurs.

9. Procédé selon l'une des revendications 1 à 8, **caractérisé en ce que** des carbonates d'alkyle, éthers de glycol, des urées substituées et/ou des urées cycliques, des fluoréthers, avec des masses molaires respectives allant jusqu'à 1500, ou des monomères avec des résidus d'alkyles perfluorés ou avec des résidus d'éthers alkyles ou de carbonates alkyles sont utilisés comme solvants pour la dissolution ou la dispersion des sels conducteurs ou des additifs et pour le gonflement des polymères organiques.

10. Procédé selon la revendication 9, **caractérisé en ce que** le solvant est utilisé dans des teneurs comprises entre 1 et 1000 % par rapport aux sels conducteurs mis en oeuvre.

11. Procédé selon l'une des revendications précédentes, **caractérisé en ce que** le liant polymère comprend PB, polyoléfines, polyéthylène, polypyrrolidone, polybutènes ainsi que leurs homologues et copolymères, polyvinyléther, polystyrène et copolymères avec butadiène ou isoprène, polymères blocs, caoutchouc SBR, butylcaoutchouc, cis-polybutadiènes et/ou 1,2-polybutadiènes, fluoroélastomères, copolymères ou terpolymères à base de fluorure de vinylidène, hexafluoropropène, tétrafluoréthène, dérivés perfluoralcoxy, ainsi que des polyalkylènoxydes à groupes terminaux masqués et des éthers cycliques.

12. Procédé selon la revendication 11, **caractérisé en ce que** le liant polymère est mis en oeuvre dans des teneurs comprises entre 5 et 30 % en poids par rapport aux masses actives d'électrode respectives.

13. Procédé selon l'une des revendications précédentes, **caractérisé en ce que** la fabrication des masses d'électrode est effectuée par étapes, de telle manière que les composants actifs respectifs sont intimement mélangés et/ou pulvérisés avec des teneurs proportionnelles en sel conducteur, additif et solvant avant d'être combinés aux autres composants d'électrode.

14. Procédé selon la revendication 13, **caractérisé en ce que** le mélange et/ou la pulvérisation sont exécutés en lit fluide ou en bain ultrasonique.

15. Procédé selon la revendication 13 ou la revendication 14, **caractérisé en ce que** le mélange et/ou la pulvérisation sont exécutés à températures comprises entre -20 et 200 °C.

16. Procédé selon l'une des revendications précédentes, **caractérisé en ce que** la fabrication du système composite anode/séparateur/cathode selon l'invention est effectuée par traitement dans un processus continu à une seule étape de la masse d'électrode, tout comme de la masse de séparateur.

17. Procédé selon la revendication 16, **caractérisé en ce que** les masses d'électrode sont appliquées sur des dérivateurs sélectionnés parmi des feuilles métalliques, des tissus en fibres de carbone, des réseaux, des feuilles de polyacétylène, des feuilles de polypyrrole.

18. Procédé selon la revendication 17, **caractérisé en ce que** une feuille d'Al à apprêt primaire est utilisée comme dérivateur de cathode.

19. Procédé selon l'une des revendications 17 ou 18, **caractérisé en ce que** le revêtement est effectué sur une ou deux faces.

20. Procédé selon l'une des revendications 17 à 19, **caractérisé en ce que** le système composite fabriqué est laminé à des températures allant de la température ambiante à 100 °C.

21. Procédé selon l'une des revendications précédentes, **caractérisé en ce que** la fabrication du composite d'ensemble consistant en dérivateurs, masses d'électrode avec la couche intercalaire de séparateur est effectuée de manière continue ou discontinue, et/ou **en ce que** la fabrication d'une batterie lithium-polymère est effectuée par stratification et/ou enroulement avec mise sous boîtier et polarisation consécutives.

22. Procédé selon l'une des revendications précédentes, **caractérisé en ce que** les masses fabriquées sont utilisées pour des systèmes électrophorétiques, des diodes ou des capteurs, ou des accumulateurs d'énergie.
